# EUROPEAN PATENT SPECIFICATION

(11) **EP 0 771 857 B1**
(45) Date of publication and mention of the grant of the patent: **13.03.2002**
(21) Application number: 96117378.8
(22) Date of filing: 30.10.1996
(51) Int. Cl.: C09C 3/10, C09D 7/12, C09C 1/36

(54) **Coating composition comprising stabilized inorganic pigments**
Beschichtungszusammensetzung enthaltend stabilisierte anorganische Pigmente
Composition de revêtement comprenant des pigments inorganiques stabilisés

(30) Priority: 03.11.1995 US 552814; 03.11.1995 US 552815
(43) Date of publication of application: 07.05.1997
(73) Proprietor: BASF CORPORATION, Mount Olive, New Jersey 07828-1234 (US)
(72) Inventor: Menovcik, Gregory G., Farmington Hills, Michigan 48334 (US); Davis, Hilary P., Utica, Michigan 48317 (US); Balch, Thomas C., West Bloomfield, Michigan 48323 (US); Dudek, Paul, Dearborn, Michigan 48124 (US)
(74) Representative: Münch, Volker, Dr.

(56) References cited:
- EP-A- 0 132 132
- EP-A- 0 568 720
- DE-A- 4 317 019
- US-A- 5 562 978
- DATABASE WPI Week 9411 Derwent Publications Ltd., London, GB; AN 94-089500 XP002065655 & JP 06 041 475 A (MISAWA HOMES CO.) , 15 February 1994
- DATABASE WPI Week 8636 Derwent Publications Ltd., London, GB; AN 86-235259 XP002065656 & JP 61 163 970 A (NIPPON PAINT CO.) , 24 July 1986
- DATABASE WPI Week 9408 Derwent Publications Ltd., London, GB; AN 94-062184 XP002065657 & JP 06 016 980 A (NEC CORP.) , 25 January 1994

## Description

### BACKGROUND OF THE INVENTION

### Field of the Invention

The present invention relates to coatings comprising stabilized inorganic pigments. More specifically the invention relates to waterborne coatings comprising inorganic pigments treated with acid functional polyester resins or phosphate esters. Further, the invention relates to a method of stabilizing inorganic pigments in aqueous media.

### Description of the Related Art

Inorganic pigments are included in waterborne coating compositions as the pigment provides desirable color effects. Various problems are encountered in waterborne coatings containing these pigments, when the pigments are utilized without stabilization. These problems include gassing or oxidation of the inorganic pigments when the pigment is exposed to an aqueous environment. The pigment reacts with water to produce hydrogen gas and a metal hydroxide. The reaction is a form of corrosion. The amount of corrosion is measured by the amount of hydrogen gas produced over a given period of time. Corrosion is exacerbated since the reaction results in the continuous formation of H⁺ and OH⁻ ions. The H⁺ ions attack and corrode the pigment and the OH⁻ ions cause the pH of the environment to further increase. In coating compositions, contact of the inorganic pigment with the aqueous environment is continuous over extended periods of time, since coatings containing the pigment are often stored for 6 months or more before use.

Gassing of the inorganic pigment causes a loss of viscosity of the coating composition and consequent loss of metal control in the coating composition. The result is often a cured film exhibiting a gray color, rather than the desired bright metallic appearance.

An object of the present invention is treatment of inorganic pigment to reduce or eliminate pigment gassing, when the pigment is used in an aqueous environment or in a waterborne coating composition.

### Summary of the Invention

The present invention is a waterborne coating composition comprising stabilized inorganic pigments. The invention further defines a method for stabilizing inorganic pigments for use in waterborne coating compositions.

The method for treating the pigment comprises, first, forming a pigment treatment composition comprising either a polyester resin having an acid number between 15 and 50, or a phosphate or pyrophosphate ester resin having an acid number between 10 and 50, or a mixture thereof. To this resin is added an aminoplast resin, and solvent. The pigment is treated with the pigment treatment composition, by means of spraying, grinding or milling the pigment with the treatment composition, to form the treated pigment. Preferably, the pigment is ground or milled with the pigment treatment composition to form a pigment paste or pigment dispersion.

A coating composition may be formed by adding a treated pigment, as described above, to a principal resin, and optionally adding solvents, pigments, catalysts, hindered amine light stabilizers, ultraviolet light absorbers, rheology control additives and other additives known to those skilled in the art.

### Description of the Drawing

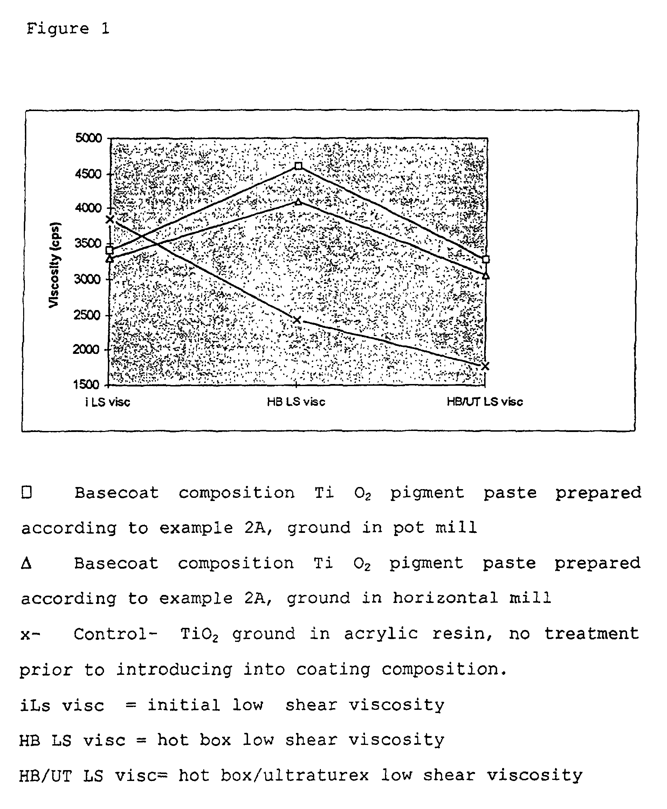

Figure 1 illustrates comparative viscosities of coatings prepared with and without treated pigment.

### Detailed Description of the Invention

The present invention is a waterborne coating composition comprising inorganic pigments stabilized to inhibit gassing of the pigment in an aqueous media. The invention further defines the method for stabilizing the pigment. The pigment is treated by spraying, milling or grinding the pigment with a mixture of polyester having an acid number between 15 and 50 KOH/g or phosphate or pyrophosphate ester having an acid number between 10 and 50 KOH/g, or a mixture of these resins, and aminoplast resin and solvent.

Suitable polyester polymers for purposes of the present invention are those prepared from polyfunctional acids and polyhydric alcohols, wherein the polyester has an acid number between 15 and 50 KOH/g. Preferably the polyester is a branched chain polyester.

Examples of acids used to prepare the polyester include mono, di-, or higher functionality carboxylic acids having carbon chain lengths of 18 or fewer carbon units, as well as longer carboxylic acids, (e.g., C36 dimer fatty acids). It is preferable that the carboxylic acid have two or more carboxylic acid groups. Useful dicarboxylic acid compounds include adipic acid, oxalic acid, malonic acid, succinic acid, glutaric acid, pimelic acid, maleic acid, azeleic acid, sebacic acid, perfluoroazelaic acid and fumaric acid. Aromatic dicarboxylic acids are also preferred. Examples of these acids include isophhalic acid, phthalic acid. Alkylene and aralkylene carboxylic acids can also be used. For purposes of the present invention branched chain polyesters are preferred, and are provided by including an acid compound containing three or more carboxylic acid groups, for example citric acid or trimellitic anhydride.

The corresponding anhydrides of the above described acids and mixtures thereof can also be employed.

The polyester resins are synthesized from the above-described carboxylic acid component and a polyol component. The polyester resin may be terminated by hydroxy functionality, acid functionality or hydroxy-acid functionality.

Suitable polyols are 1,4-butanediol, 1,6-hexanediol, neopentyl glycol, ethylene glycol, propylene glycol, diethylene glycol, dipropylene glycol, butylene glycol, glycerol, hydrogenated bisphenol A, cyclohexane dimethanol, caprolactaone diol (i.e., the reaction product of caprolactone and ethylene glycol), hydroxyalkylated bisphenols, trimethylolpropane, pentaerythritol, 2,2,3,3,4,4-hexafluoro-1,5-pentanediol and sorbitol. Suitable alcohols include alcohols derived from fatty alcohols. Particularly preferred are dimer fatty alcohols. For purposes of the present invention, a mixture of 1,6-hexane diol and dimer fatty alcohols is preferred.

The polyester resin in most cases is comprised of one or more polyols, preferably a diol. It may be desirable to include polyols having three or more hydroxy groups, to provide a branched polyester. There may be a small amount of monoalcohol (e.g. butanol) present in the polyol component, particularly if larger proportions of higher functional alcohols are used. These monoalcohols serve as chain terminators. In certain instances, for example, where certain high molecular weight polyols are used, the polyols can be largely or even entirely made up of compounds of functionality greater than two.

Also suitable for purposes of the present invention are phosphate esters and pyrophosphate esters. The phosphate and pyrophosphate esters suitable for purposes of the present invention have the formulae: 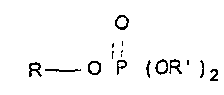 and 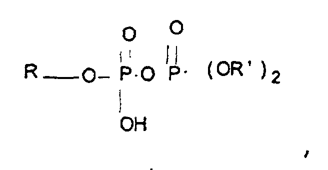 respectively. In these formulae R represents a monovalent lower alkyl radical containing from 1 to 15 carbon atoms, R' is hydrogen, or a hydrocarbon radical selected from the group consisting of monovalent lower alkyl radicals containing from 1 to 10 carbon atoms, or a phenyl radicals. Preferred phosphate and pyrophosphate esters include trialkyl phosphates, tricresyl phosphate, phosphites, and esters of phosphoric and phosphorous acid. Examples of these include, isodecyl diphenyl phosphate; tributoxyethyl phosphate; and the phosphate ester of a diethylamine and phosphoric acid, where the diethyl amine is 2-hexyloxyethyl ester diethylamine salt, diethylamine or a mixture of the two.

Aminoplast resins suitable for purposes of the present invention are aldehyde condensation products of melamine, urea, and similar compounds. Products obtained from the reaction of formaldehyde with melamine, urea or benzoguanamine are most common and are preferred. However, condensation products of other amines and amides can also be employed, for example, aldehyde condensates of triazines, diazines, triazoles, guanidines, guanamines and alkyl- and aryl-substituted ureas and alkyl- and aryl-substituted melamines. Some examples of such compounds are N,N-dimethylurea, benzourea, dicyandiamide, formoguanamine, acetoguanamine, ammeline, 2-chloro-4,6-diamino-1,3,5-triazine, 6-methyl-2,4-diamino-1,3,5-triazine, 3,5-diamino-triazole, triaminopyrimidine, 2-mercapto-4,6-diaminopyrimidine, 2,4,6-triethyltriamino-1,3,5-triazine, and the like.

While the aldehyde employed is most often formaldehyde, other similar condensation products can be made from other aldehydes, for example, acetaldehyde, crotonaldehyde, acrolein, benzaldehyde, furfural, and others.

The amine-aldehyde condensation products contain methylol or similar alkylol groups, and in most instances at least a portion of these alkylol groups are etherified by a reaction with an alcohol to provide organic solvent-soluble resins. Any monohydric alcohol can be employed for this purpose, including such alcohols, as methanol, ethanol, propanol, butanol, pentanol, hexanol, heptanol and others, as well as benzyl alcohol and other aromatic alcohols, cyclic alcohols for example cylohexanol, monoethers of glycols such as Cellosolves and Carbitols™ (Union Carbide), and halogen-substituted or other substituted alcohols, such as 3-chloropropanol. The preferred amine-aldehyde resins are etherified with methanol or butanol.

Inorganic pigments suitable for the present invention include titanium dioxide, ferrous pigments, chromium pigments such as chromium oxide, zinc chromate, lead chromate, lead pigments, zinc pigments, antimony oxide, cadmium sulfide, cadmium selenide, and nickel titanate. The present invention is particulary useful for the inorganic oxide pigments of iron, chromium, lead and titanium dioxide. The present invention is also useful for inorganic pigments treated with aluminum oxide.

Suitable solvents for purposes of the present invention include butyl cellosolve, n-propoxy propanol, sold under the trademark Propyl Proposol®, propylene glycol monomethyl ether and propylene glycol monobutyl ether.

The pigment treatment composition is applied to one or more inorganic pigments by spraying or otherwise mixing the treating agent with the pigment. The treatment can be applied by the addition of the treating agent to the intensified bar of a V-blender or by spraying the treating agent into a screw conveyor or paddle mixer containing the pigments. In a preferred embodiment, the pigment treatment composition and the inorganic pigment are mixed together and the pigment is ground using a horizontal mill or other suitable mill, to form a pigment paste or pigment dispersion. The pigment dispersion may then be added to a principal resin to form a coating composition. This coating composition preferably comprises between 1.0 and 20.0% by weight of the pigment dispersion.

A pigment dispersion is prepared by combining the polyester or phosphate or pyrophosphate ester, or a mixture of these esters, aminoplast resin, solvent and one or more pigments. The polyester, pyrophosphate ester, or phosphate ester is used in an amount between 25.0 and 50.0% by weight, preferably between 30 and 40% by weight. The amino functional resin is used in an amount between 5.0 and 25.0% by weight, preferably between 10.0 and 20.0% by weight. Inorganic pigment is used in an amount between 10.0 and 45.0% by weight, preferably in an amount between 25 and 35% by weight. Solvent is included in an amount between 10.0 and 30.0%, preferably between 10.0 and 20.0% by weight, where all weights are based on total pigment dispersion weight.

A waterborne coating composition is formed from the treated pigment of the present invention, by combining the pigment with a principal resin. Preferably, the pigment is added to the principal resin in the form of a pigment dispersion as described in the preceding paragraph. A neutralizing agent may be added to enhance the water dispersibility of the pigment paste. Suitable neutralizing agents include dimethylethanol amine and aminomethyl propane. The principal resin may be any polymeric resin such as acrylic resins, epoxy resins, amine modified resins, phenolic resins, saturated and unsaturated polyester resins, urea resins, urethane resins, blocked isocyanate resins, carbamate resins and mixtures thereof. The principal resin may further comprise reactive functionality to react with a crosslinking resin. Such reactive functionalities include, but are not limited to hydroxyl, carboxyl, amino, carbamate, carbonate, epoxy, carbodiimide or urea groups, and any other suitable functional group.

The reduced gassing of the pigment is achieved by treating the pigment prior to its introduction to a coating composition. The desired reduction in gassing of the pigment is not accomplished by adding the pigment treatment composition to the coating composition containing pigment.

Other additives may be added to the coating composition, including solvents, pigments, catalysts, hindered amine light stabilizers, ultraviolet light absorbers, rheology control additives, crosslinking agents, flow control additives and other additives known to one skilled in the art.

Waterborne coating compositions containing the inorganic pigments treated according to the present invention exhibited decreased gassing of the inorganic pigment and improved rheology control, in contrast to waterborne basecoat compositions utilizing the pigments without the treatment. Figure 1 illustrates the improved rheology control, as it shows the viscosity of the coatings containing the treated pigments increases in comparison to the coating with untreated pigments.

Figure 1 illustrates the initial low shear viscosity, (iLS visc); a low shear viscosity of samples following a hot box treatment (HB LS visc); and a low shear viscosity following hot box treatment and subsequent Ultraturrax® treatment(HB/UT LS visc). All low shear viscosity readings were measured on a Brookfield® viscometer at a shear of 2 sec⁻¹. The initial low shear viscosity (iLS visc) was measured before the coating was subjected to any treatment procedures.

The hot box low shear viscosity (HB LS visc) was measured after the waterborne basecoat sample, prepared according to Example 3, was subjected to hot box testing. The hot box test is conducted by adjusting the pH to 8.0 with dimethyl ethanol amine. The viscosity is measured at high shear of 426 sec⁻¹ on the Brookfield® viscometer. The basecoat is adjusted to spray viscosity with deionized water and high shear viscosity is measured again. The basecoat sample is then subjected to high shear at 8000 RPM, in a high shear apparatus such as an Ultraturrax®. The high shear apparatus serves to activate the rheology control agent. The basecoat sample is then placed in a 110°F oven for 5 days. The samples then are allowed to cool to room temperature. Viscosity measurements are then performed. The (HB LS visc) in Figure 1, indicates the viscosity measured at this point.

For samples subjected to the Hot Box and treatment in the Ultraturrax® (HB/UT LS visc), following removal from the oven, the sample was subjected to high shear in an Ultraturrax® again, and the viscosity was then measured. Figure 1 illustrates the viscosity following the second treatment in an Ultraturrax® processor.

The present invention is further illustrated by the following non-limiting examples.

### EXAMPLES

### Example 1

### Polyester Polymer

| **Description** | **Amount** |
|---|---|
| DIMER FATTY ACID | 29.06 |
| HEXANE DIOL | 28.54 |
| ISOPHTHALIC ACID | 8.30 |
| TOLUENE | 1.21 |
| TRIMELLITIC ANHYDRIDE | 11.16 |
| DIMETHYL ETHANOL AMINE | 0. 01 |
| BUTYL ALCOHOL | 12.07 |
| N-PROPOXY PROPANOL | 9.65 |
| Total | 100.0 |

### Example 2

### Pigment Grind Resin Formulations

| **Ingredient** | **Example** | | | |
|---|---|---|---|---|
| | Ex. 2A | Ex. 2B | Ex. 2C | Ex. 2D |
| Polyester Resin from Ex. 1 | 40.00 | 30.61 | 40.00 | 35.00 |
| Melamine Resin^{a} | 15.00 | 15.00 | 15.00 | 19.06 |
| Polyether grafted acrylic | --- | 13.51 | --- | --- |
| n-propoxy proposol | 15.00 | 10.88 | 14.42 | 15.94 |
| Titanium Dioxide Pigment | 30.00 | 30.00 | 30.00 | 30.00 |
| Dimethylethanol amine | --- | --- | 0.58 | --- |
| Total | 100.00 | 100.00 | 100.00 | 100.00 |

| | | | | |
|---|---|---|---|---|
| ^{a} High imino fully methylated melamine resin, available under the trademark Cymel® 327 from Cytec. | | | | |

### Example 3

### Basecoat Formulation with Treated Titanium Dioxide Pigment

| INGREDIENT | AMOUNT (% By Weight based on total coating composition weight) |
|---|---|
| Rheology Control Agent¹ | 25.32 |
| Melamine Resin² | 3.02 |
| Polyurethane Resin | 37.14 |
| TiO₂ Pigment Dispersion ( Ex. 2A) | 4.47 |
| Black pigment dispersion | 0.62 |
| White pigment dispersion | 0.27 |
| Red pigment dispersion | 0.22 |
| Ultraviolet Light Absorber | 0.34 |
| Flow Control Agent | 0.86 |
| Aluminum Slurry | 17.23 |
| Dimethyl ethanol amine | 0.04 |
| n-propoxy propanol | 0.69 |
| Deionized water | 9.78 |
| | |
| Total | 100.00 |

| | |
|---|---|
| ¹Rheology Control agent is a 3.5% Laponite solution | |
| ²Melamine resin is Cymel 327 from American Cyanamid, of Wayne, New Jersey. | |

## Claims

1. A method for stabilizing inorganic pigments in an aqueous media, comprising the steps of
a) forming a pigment treatment composition comprising
i) a resin selected from the group consisting of polyester resins having an acid number between 15 and 50, and phosphate or pyrophosphate ester resins having an acid number between 10 and 50, and mixtures thereof, and
ii) an aminoplast resin, and
iii) solvent,
b) combining the pigment treatment composition with inorganic pigment,
c) adding the treated pigment to a principal resin, and
d) optionally adding compounds selected from the group consisting of solvents, pigments, catalysts, hindered amine light stabilizers, ultraviolet light absorbers, flow control additives, crosslinking agents, rheology control additives, and mixtures thereof.

2. The method of claim 1, wherein step b) comprises grinding the pigment treatment compound and pigment to form a pigment dispersion.

3. The method of one of the claims 1 and 2, wherein the polyester resin used to treat the pigment is a branched polyester resin comprising the reaction product of acid functional compounds selected from the group consisting of dimer fatty acid, isophthalic acid, phthalic acid, citric acid, the corresponding anhydrides thereof and mixtures thereof, and an alcohol selected from the group consisting of 1,4-butanediol, 1,6-hexanediol, neopentyl glycol, ethylene glycol, propylene glycol, diethylene glycol, dipropylene glycol, butylene glycol, butanol and mixtures thereof.

4. The method of one of the claims 1 to 3, wherein the aminoplast resin is a melamine resin.

5. The method of one of the claims 1 to 4, wherein the inorganic pigment is selected from the group consisting of titanium dioxide, iron oxides, chromium oxides, lead oxides, any of the preceding pigments treated with aluminum oxide, and mixtures thereof.

6. The method of one of the claims 1 to 5, wherein the polyester, phosphate or pyrophosphate ester resin is present in the pigment treatment composition in an amount between 25.0 and 65.0% by weight of the pigment treatment composition, based on total treatment composition weight.

7. The method of one of the claims 1 to 6, wherein the aminoplast resin is present in an amount between 15.0 and 25.0% by weight, based on total treatment composition weight.

8. The method of one of the claims 1 to 7, wherein solvent is present in an amount between 10.0 and 30.0% by weight, based on total pigment treatment composition weight.

9. The method of one of the claims 2 to 8, wherein the pigment dispersion comprises between 25.0 and 50.0% by weight polyester, phosphate or pyrophosphate ester resin, between 5.0 and 25.0% by weight aminoplast resin, between 10.0 and 30.0% by weight solvent, and between 10.0 and 45.0% by weight inorganic pigment, based on total pigment dispersion weight.

10. A waterborne coating composition comprising a principal resin and an inorganic pigment obtainable by a method according to any of the claims 1 to 9.

11. The waterborne coating composition of claim 10, wherein the coating composition further comprises compounds selected from the group consisting of solvents, pigments, catalysts, hindered amine light stabilizers, ultraviolet light absorbers, flow control additives, rheology control additives, crosslinking agents and mixtures thereof.

12. The waterborne coating composition of one of the claims 10 and 11, wherein the coating composition is a basecoat composition.

13. The waterborne coating composition of one of the claims 10 to 12, wherein the coating composition comprises between 1.0 and 20.0% by weight of the pigment dispersion.

14. The waterborne coating composition of one of the claims 10 to 13, wherein the coating composition comprises a waterborne basecoat composition.

15. The waterborne coating composition of claim 14, wherein the coating composition comprises a waterbome basecoat composition including an aluminum flake pigment.

16. An inorganic coated pigment having thereon a pigment treatment composition obtained by the process of claim 1.

## Patentansprüche

1. Verfahren zur Stabilisierung von anorganischen Pigmenten, bei dem man
a) eine Pigmentbehandlungszusammensetzung herstellt, die
i) ein Harz aus der Gruppe bestehend aus Polyesterharzen mit einer Säurezahl zwischen 15 und 50 und Phosphat- oder Pyrophosphatesterharzen mit einer Säurezahl zwischen 10 und 50 und Gemischen davon,
ii) ein Aminoplastharz und
iii) Lösungsmittel
enthält,
b) die Pigmentbehandlungszusammensetzung mit anorganischem Pigment vereinigt,
c) das behandelte Pigment zu einem Grundharz gibt und
d) gegebenenfalls Verbindungen aus der Gruppe bestehend aus Lösungsmitteln, Pigmenten, Katalysatoren, Lichtschutzmitteln vom HALS-Typ, UV-Absorbern, Verlaufmitteln, Vernetzern, rheologiesteuernden Additiven und Gemischen davon zusetzt.

2. Verfahren nach Anspruch 1, bei dem man in Schritt b) die Pigmentbehandlungsmasse und Pigment zu einer Pigmentdispersion anreibt.

3. Verfahren nach Anspruch 1 oder 2, bei dem man als Polyesterharz zur Behandlung des Pigments ein verzweigtes Polyesterharz einsetzt, bei dem es sich um das Umsetzungsprodukt aus säurefunktionellen Verbindungen aus der Gruppe bestehend aus Dimerfettsäure, Isophthalsäure, Phthalsäure, Citronensäure, den entsprechenden Anhydriden davon und Gemischen davon und einem Alkohol aus der Gruppe bestehend aus 1,4-Butandiol, 1, 6-Hexandiol, Neopentylglykol, Ethylenglykol, Propylenglykol, Diethylenglykol, Dipropylenglykol, Butylenglykol, Butanol und Gemischen davon handelt.

4. Verfahren nach einem der Ansprüche 1 bis 3, bei dem man als Aminoplastharz ein Melaminharz einsetzt.

5. Verfahren nach einem der Ansprüche 1 bis 4, bei dem man das anorganische Pigment aus der Gruppe bestehend aus Titandioxid, Eisenoxiden, Chromoxiden, Bleioxiden, einem mit Aluminiumoxid behandelten Pigment aus der vorstehenden Aufzählung und Gemischen davon auswählt.

6. Verfahren nach einem der Ansprüche 1 bis 5, bei dem das Polyester-, Phosphat- oder Pyrophosphatesterharz in der Pigmentbehandlungszusammensetzung in einer Menge zwischen 25,0 und 65,0 Gew.-% der Pigmentbehandlungszusammensetzung, bezogen auf das Gesamtgewicht der Behandlungszusammensetzung, vorliegt.

7. Verfahren nach einem der Ansprüche 1 bis 6, bei dem das Aminoplastharz in einer Menge zwischen 15,0 und 25,0 Gew.-%, bezogen auf das Gesamtgewicht der Behandlungszusammensetzung, vorliegt.

8. Verfahren nach einem der Ansprüche 1 bis 7, bei dem das Lösungsmittel in einer Menge zwischen 10,0 und 30,0 Gew.-%, bezogen auf das Gesamtgewicht der Behandlungszusammensetzung, vorliegt.

9. Verfahren nach einem der Ansprüche 2 bis 8, bei dem die Pigmentdispersion zwischen 25,0 und 50,0 Gew.-% Polyester-, Phosphat- oder Pyrophosphatesterharz, zwischen 5,0 und 25,0 Gew.-% Aminoplastharz, zwischen 10,0 und 30,0 Gew.-% Lösungsmittel und zwischen 10,0 und 45,0 Gew.-% anorganisches Pigment, bezogen auf das Gesamtgewicht der Pigmentdispersion, enthält.

10. Nach einem Verfahren nach einem der Ansprüche 1 bis 9 erhältliche wäßrige Beschichtungszusammensetzung, enthaltend ein Grundharz und ein anorganisches Pigment.

11. Wäßrige Beschichtungszusammensetzung nach Anspruch 10, die außerdem auch noch Verbindungen aus der Gruppe bestehend aus Lösungsmitteln, Pigmenten, Katalysatoren, Lichtschutzmitteln vom HALS-Typ, UV-Absorbern, Verlaufmitteln, rheologiesteuernden Additiven, Vernetzern und Gemischen davon enthält.

12. Wäßrige Beschichtungszusammensetzung nach Anspruch 10 oder 11, bei der es sich um eine Basislackzusammensetzung handelt.

13. Wäßrige Beschichtungszusammensetzung nach einem der Ansprüche 10 bis 12, die zwischen 1,0 und 20,0 Gew.-% der Pigmentdispersion enthält.

14. Wäßrige Beschichtungszusammensetzung nach einem der Ansprüche 10 bis 13, bei der es sich um eine wäßrige Basislackzusammehsetzung handelt.

15. Wäßrige Beschichtungszusammensetzung nach Anspruch 14, bei der es sich um eine wäßrige Basislackzusammensetzung mit einem Aluminiumplättchenpigment handelt.

16. Beschichtetes anorganisches Pigment mit einer darauf angeordneten, nach dem Verfahren gemäß Anspruch 1 erhaltenen Pigmentbehandlungszusammensetzung.

## Revendications

1. Procédé de stabilisation de pigments minéraux dans un milieu aqueux, comprenant les étapes consistant à:
a) former une composition de traitement comprenant
i) une résine choisie dans le groupe constitué par des résines de polyester ayant un indice d'acide entre 15 et 50, et des résines d'esters phosphate ou pyrophosphate ayant un indice d'acide entre 10 et 50, et des mélanges de celles-ci, et
ii) une résine aminoplaste, et
iii) un solvant,
b) combiner la composition de traitement du pigment avec un pigment minéral,
c) ajouter le pigment traité à une résine principale, et
d) le cas échéant ajouter des composés choisis dans le groupe constitué par des solvants, des pigments, des catalyseurs, des stabilisants à la lumière de type d'amine à encombrement stérique, des absorbeurs de rayonnement ultraviolet, des additifs de régulation de l'écoulement, des agents de réticulation, des additifs de régulation de la rhéologie, et des mélanges de ceux-ci.

2. Procédé selon la revendication 1, dans lequel l'étape b) comprend le broyage du composé de traitement du pigment et du pigment pour former une dispersion de pigment.

3. Procédé selon l'une des revendications 1 et 2, dans lequel la résine de polyester utilisée pour traiter le pigment est une résine de polyester ramifié comprenant le produit de réaction de composés à fonction acide choisis dans le groupe constitué par un acide gras dimère, l'acide isophtalique, l'acide phtalique, l'acide citrique, leurs anhydrides correspondants et leurs mélanges, avec un alcool choisi dans le groupe constitué par le 1,4-butanediol, le 1,6-hexanediol, le néopentylglycol, l'éthylèneglycol, le propylèneglycol, le diéthylèneglycol, le dipropylèneglycol, le butylèneglycol, le butanol et des mélanges de ceux-ci.

4. Procédé selon l'une des revendications 1 à 3, dans lequel la résine aminoplaste est une résine mélamine.

5. Procédé selon l'une des revendications 1 à 4, dans lequel le pigment minéral est choisi dans le groupe constitué par le dioxyde de titane, les oxydes de fer, les oxydes de chrome, les oxydes de plomb, n'importe lequel des pigments précédents traité avec de l'oxyde d'aluminium, et des mélanges de ceux-ci.

6. Procédé selon l'une des revendications 1 à 5, dans lequel la résine polyester, d'ester phosphate ou d'ester pyrophosphate est présente dans la composition de traitement du pigment en une quantité comprise entre 25,0 et 65,0% en poids de la composition de traitement du pigment, par rapport au poids total de la composition de traitement.

7. Procédé selon l'une des revendications 1 à 6, dans lequel la résine aminoplaste est présente en une quantité comprise entre 15,0 et 25,0% en poids, par rapport au poids total de la composition de traitement.

8. Procédé selon l'une des revendications 1 à 7, dans lequel le solvant est présent en une quantité comprise entre 10,0 et 30,0% en poids, par rapport au poids total de la composition de traitement du pigment.

9. Procédé selon l'une des revendications 2 à 8, dans lequel la dispersion de pigment comprend entre 25,0 et 50,0% en poids de résine de polyester, d'ester phosphate ou d'ester pyrophosphate, entre 5,0 et 25,0% en poids de résine aminoplaste, entre 10,0 et 30,0% en poids de solvant, et entre 10,0 et 45,0% en poids de pigment minéral, par rapport au poids total de la dispersion de pigment.

10. Composition de revêtement à base aqueuse comprenant une résine principale et un pigment minéral obtenu par un procédé selon l'une quelconque des revendications 1 à 9.

11. Composition de revêtement à base aqueuse selon la revendication 10, dans laquelle la composition de revêtement comprend en outre des composés choisis dans le groupe constitué par des solvants, des pigments, des catalyseurs, des stabilisants à la lumière de type amine à encombrement stérique, des absorbeurs de lumière ultraviolette, des additifs de régulation de l'écoulement, des additifs de régulation de la rhéologie, des agents de réticulation, et des mélanges de ceux-ci.

12. Composition de revêtement à base aqueuse selon l'une des revendications 10 et 11, dans laquelle la composition de revêtement est une composition de couche de fond.

13. Composition de revêtement à base aqueuse selon l'une des revendications 10 à 12, dans laquelle la composition de revêtement comprend entre 1,0 et 20,0% en poids de la dispersion de pigment.

14. Composition de revêtement à base aqueuse selon l'une des revendications 10 à 13, dans laquelle la composition de revêtement comprend une composition de couche de fond à base aqueuse.

15. Composition de revêtement à base aqueuse selon la revendication 14, dans laquelle la composition de revêtement comprend une composition de couche de fond à base aqueuse contenant un pigment en paillettes d'aluminium.

16. Pigment minéral enrobé sur lequel il y a une composition de traitement du pigment obtenue par le procédé de la revendication 1.
